# EUROPÄISCHE PATENTSCHRIFT

(11) **EP 0 418 544 B1**
(45) Veröffentlichungstag und Bekanntmachung des Hinweises auf die Patenterteilung: **05.05.1993**
(21) Anmeldenummer: 90115375.9
(22) Anmeldetag: 10.08.1990
(51) Int. Cl.: C01B 17/90

(54) **Verfahren zum Konzentrieren metallsulfathaltiger Schwefelsäure**
Process for the concentration of metal sulphate containing sulphuric acid
Procédé pour concentration d'acide sulphurique contenant des sulfates métalliques

(30) Priorität: 23.08.1989 DE 3927751
(43) Veröffentlichungstag der Anmeldung: 27.03.1991
(73) Patentinhaber: BAYER AG, 51368 Leverkusen (DE)
(72) Erfinder: Lailach, Günter, Dr., D-4150 Krefeld (DE); Gerken, Rudolf, Dr., D-4150 Krefeld 1 (DE)

(56) Entgegenhaltungen:
- EP-A- 0 133 505
- DE-C- 972 412
- GB-A- 940 656

## Beschreibung

Die vorliegende Erfindung betrifft ein Verfahren zur Rückgewinnung von Schwefelsäure aus metallsulfathaltigen Dünnsäuren durch Eindampfen in Vakuumverdampfern und Abtrennen der Metallsulfate aus den beim Eindampfen erhaltenen Suspensionen.

Es ist bekannt, verdünnte metallsulfathaltige Schwefelsäure, insbesondere sogenannte Dünnsäure aus dem Sulfatprozeß zur Titandioxidherstellung, durch mehrstufige Vakuumverdampfung so weit zu konzentrieren, daß die Metallsulfate weitgehend unlöslich werden und von einer 62 bis 70 %igen Schwefelsäure abgetrennt werden können, die in den Prozeß zurückgeführt wird (EP-A 133 505). Dabei treten allerdings Verluste an Schwefelsäure und Metallsulfaten auf, die zu einer Verunreinigung des Brückenkondensats führen.

Angesichts der zunehmend strengeren Anforderungen an die Abwasserqualität müssen diese Verluste verringert werden.

Eine Fällung von Gips und Metallhydroxiden aus dem Brüdenkondensat durch Zugabe von Calciumverbindungen führt zu schlecht filtrierbaren, stark verdünnten Suspensionen und letzlich zu einem Deponieproblem.

Primäres Ziel sollte deshalb sein, die Verunreinigung des Brüdenkondensats durch metallsulfathaltige Tropfen zu vermeiden. Der Vorschlag, diese Tropfen mittels Tropfenabscheider vor der Brückenkondensation abzuscheiden, führt aber zu großen Problemen, weil die festen Metallsulfate dazu zeigen, an den Tropfenabscheidern festzukleben und so erhebliche Störungen des Prozesses verursachen können.

Diese Probleme werden dadurch vergrößert, daß sich die Metallsulfate, insbesondere das Eisensulfat-Monohydrat, in kaltem Wasser nur schlecht auflösen. Bei einem Druck von 30 bis 100 mbar, wie er bei der Vakuumeindampfung von Schwefelsäure auf ca. 70 % erforderlich ist, kühlt sich aber Wasser, das gegebenenfalls zum Waschen von Tropfenabscheidern während des Betriebes eingesprüht wird, sofort auf 25 bis 45°C ab. Die Tropfenabscheider können unter diesen Bedingungen nur mit relativ großen Wassermengen betriebsfähig gehalten werden. Die Eindampfung des aus dem Tropfenabscheider abfließenden kontaminierten Wasser beeinträchtigt den Prozeß jedoch sehr.

Ziel der vorliegenden Erfindung ist die Rückgewinnung von Schwefelsäure aus metallsulfathaltigen Dünnsäuren durch Eindampfen unter Vakuum und Abtrennen der Metallsulfate aus der beim Eindampfen erhaltenen Suspension, wobei die Eindampfung unter weitestgehender Vermeidung einer Kontamination des Brüdenkondensats durch Schwefelsäure und Metallsulfate erfolgt, um eine chemische Behandlung des Brüdenkondensats und damit die Erzeugung von festen Abfallstoffen zu vermeiden. Ein weiteres, wesentliches Ziel ist es, ein Verfahren zur Verfügung zu stellen, das eine störungsfreie Prozeßführung erlaubt.

Die erfindungsgemäßen Ziele werden dadurch erreicht, daß die aus den Verdampfern austretenden Brüden, die metallsulfathaltige Schwefelsäuretropfen und feste Metallsulfate enthalten, durch direkten Kontakt mit gekühltem kontaminiertem Brüdenkondensat kondensiert werden, daß die Kühlung dieses als Kühlmedium im Kreislauf geführten Brüdenkondensats in einem Flash-Verdampfer erfolgt und daß die aus dem Flash-Verdampfer austretenden metallsulfat- und schwefelsäurefreien Brüden direkt oder indirekt mittels Kühlwasser kondensiert werden. Dieses Verfahren ist Gegenstand dieser Erfindung. Dabei wird eine Menge Wasser, entsprechend 1 bis 20 % der Menge des in den Brüden enthaltenen Wasserdampfes in den Kreislauf des kontaminierten Brüdenkondensats eingespeist und eine entsprechende Menge, in der die verunreinigenden Metallsulfate und Schwefelsäure gegenüber den aus den Verdampfern austretenden Brüden um den Faktor 5 bis 100 angereichert sind, aus dem Kreislauf des kontaminierten Brüdenkondensats ausgespeist. Als kontaminiertes Brüdenkondensat wird somit eine geringe Menge 1 bis 30 %iger, vorzugsweise 5 bis 30 %iger, metallsulfathaltiger Schwefelsäure aus dem Brüdenkondensatkreislauf ausgespeist, die zusammen mit der einzudampfenden Dünnsäure wieder in das Verdampfersystem eingespeist wird.

Eine chemische Behandlung dieses konzentrierten Brüdenkondensats ist zwar möglich und gegenüber der Behandlung des nicht konzentrierten kontaminierten Brüdenkondensats vorteilhaft, aber im Sinne der ökologischen Ziele dieser Erfindung gegenüber der Rückführung in den Verdampfer zu verwerfen.

Um die Kontamination der aus dem Flash-Verdampfer austretenden Brüden durch Metallsulfate und Schwefelsäure zu vermeiden, werden diese Brüden vorteilhaft durch einen Tropfenabscheider geleitet. Da die Konzentration von Metallsulfaten und Schwefelsäure in dem im Kreislauf geführten, konzentrierten Brüdenkondensat erfindungsgemäß in einem solchen Bereich gehalten wird, daß alle Metallsulfate gelöst sind, ist ein störungsfreier Betrieb der Verdampferanlage trotz Tropfenabscheider gewährleistet. Bevorzugt werden dem im Kreislauf geführten Brüdenkondensat Entschäumer zugesetzt, z.B. sulfonierte Fettsäuren oder Tri-n-butyl-phosphat, wodurch sich gegebenenfalls Tropfenabscheider erübrigen.

Bei Anwendung des erfindungsgemäßen Verfahrens fällt letztlich dadurch, daß das aus der Dünnsäure verdampfte Wasser ohne wesentlichen zusätzlichen Energieaufwand nach der Kondensation in einem Brüdenkondensator I nochmals in einem Flash-Verdampfer verdampft und in einem Brüdenkondensator II kondensiert wird, sehr reines Brüdenkondensat an. Je nach Temperatur des verfügbaren Kühlwassers kann die Brüdenkondensation im Kondensator II durch direkte Kühlung mit Kühlwasser erfolgen, wobei das Brüdenkondensat zusammen mit dem erwärmten Kühlwasser als Abwasser abgeleitet wird, oder durch indirekte Kühlung mit einem Kühlmedium, wodurch eine Wiederverwendung des reinen Brüdenkondensats ermöglicht wird.

Ein weiteres Ziel des erfindungsgemäßen Verfahrens ist die Optimierung des Prozesses bei gleichzeitiger Minimierung der Abwasserbelastung. Dieses Ziel wird dadurch erreicht, daß bei mehrstufigen Vakuumverdampfern die oben beschriebene Behandlung der Brüden nur für solche Verdampferstufen durchgeführt wird, in denen das Wasser aus Metallsulfat-Schwefelsäure-Suspensionen verdampft wird. Bei Verdampferstufen, in denen die einzudampfende Schwefelsäure nur gelöste Metallsulfate enthält, wird die Kontamination der Brüden mit Schwefelsäure und Metallsulfaten erfindungsgemäß in ausreichendem Maß dadurch vermieden, daß der Schwefelsäure Entschäumer zugesetzt wird und/oder die Brüden durch Tropfenabscheider zum Kondensator geleitet werden.

Die Erfindung soll anhand der Fig. verdeutlicht werden, wobei es sich bei dem dargestellten Schema nur um eine mögliche Ausführung handelt.

Die 1. Verdampferstufe besteht aus einem Flash-Verdampfer 1, einer Kreislaufpumpe 2 und einem Wärmeaustauscher 3. Dünnsäure 17, die z.B. 18 bis 30 Gew.-% H₂SO₄ und 5 bis 20 Gew.-% MeSO₄ enthält, wird in die Kreislaufsäure 19 eingespeist. Die Säure wird mittels Pumpe 2 durch den Wärmeaustauscher 3 gefördert und dort mit Dampf 20 erwärmt. Das Dampfkondensat 21 kann zur Vorwärmung der Dünnsäure 17 genutzt werden. Die auf 80 - 150°C aufgeheizte Kreislaufsäure 18 wird im Flash-Verdampfer 1 durch Verdampfung von Wasser konzentriert und gekühlt. Eine der Dünnsäureeinspeisung entsprechende Menge konzentrierter Schwefelsäure 22 fließt in die zweite Verdampferstufe. Hier wird Metallsulfat-Schwefelsäure-Suspension 23, deren flüssige Phase aus 50 bis 65 %iger Schwefelsäure besteht, mittels Pumpe 5 durch den Wärmeaustauscher 6 und den Flash-Verdampfer 4 im Kreislauf gefördert. Als Heizmedium dienen in der 2. Verdampferstufe die Brüden 25 aus dem Flash-Verdampfer 1. Das aus dem Wärmeaustauscher 6 abfließende Brüdenkondensat 26 wird als Abwasser abgeleitet. Aus der aufgeheizten Suspension 24 wird im Flash-Verdampfer 4 bei 60 bis 120°C und 30 bis 100 mbar Wasser verdampft. Die aus dem Verdampfer 4 abfließende Suspension 27 wird in der 3. Verdampferstufe zusammen mit der Suspension 28 mittels Pumpe 8 durch den Wärmeaustauscher 9 und den Flash-Ver-dampfer 7 im Kreislauf gefördert. Der Wärmeaustauscher 9 wird mit Dampf 30 beheizt, wobei Kondensat 31 anfällt. Im Verdampfer 7 wird die aufgeheizte Suspension 29 bei 80 bis 150°C und 30 -100 mbar auf einen Schwefelsäuregehalt von 60 bis 82 Gew.-% (in der flüssigen Phase) konzentriert. Ein Teil 32 der konzentrierten Metallsulfat-Schwefelsäure-Suspension wird über eine Tauchvorlage 33 aus dem Verdampfersystem ausgespeist. Die weitere Behandlung zwecks Metallsulfatabtrennung und Wiederverwendung der Schwefelsäure kann z.B. entsprechend EP-A 133 505 erfolgen.

Die Brüden 34 aus Flash-Verdampfer 4 und die Brüden 35 aus Flash-Verdampfer 7 werden gemeinsam im Kondensator 10 kondensiert Die Kondensation erfolgt durch direkten Kontakt mit dem Kühlmedium 37, das eine Temperatur von maximal 40°C hat. Aus dem Kondensator 10 fließen das eingespeiste Kühlmedium 37 und das Brüdenkondensat zusammen mit allen aus den Flash-Verdampfern ausgetragenen Metallsulfaten und Schwefelsäuretropfen mit einer gegenüber Stoffstrom 37 um 2 bis 20°C höheren Temperatur ab (Stoffstrom 36). Diese Flüssigkeit 36 wird mittels Pumpe 11 in den Flash-Verdampfer 12 gefördert, in dem eine den im Kondensator 10 kondensierten Brüden entsprechende Wassermenge unter Abkühlung der Flüssigkeit verdampft wird. Schwefelsäure und Metallsulfate verbleiben in der als Kühlmedium 37 wieder eingesetzten Flüssigkeit. Durch Einspeisung von Wasser 38 in den Kreislaufstrom 36 und Ausspeisen einer entsprechenden Menge 39 des Kühlmediums 37 können die H₂SO₄- und MeSO₄-Konzentrationen im Kühlmedium eingestellt werden. Erfindungsgemäß wird eine Schwefelsäurekonzentration unter 30 Gew.-% eingestellt, um das Kristallisieren von Metallsulfaten zu vermeiden. Diese ausgespeiste metallsulfathaltige Schwefelsäure 39 wird vorzugsweise zusammen mit der Dünnsäure 17 in das Verdampfersystem zurückgeleitet. Die im Verdampfer 12 freiwerdenden Brüden 41 werden, falls erforderlich, durch einen Tropfenabscheider 40 geleitet, in dem feststoffreie Schwefelsäuretropfen problemlos abgeschieden werden können.

Die Kondensation der tropfenfreien Brüden 41 erfolgt im Kondensator 34 in direktem Kontakt mit Kühlwasser 42. Kühlwasser und Brüdenkondensat werden durch eine Tauchung 15 als nahezu unbelastetes Abwasser 43 abgeleitet.

Mittels Pumpe 13 wird aus dem Kondensator 10 die Leckageluft 45, mittels Pumpe 16 aus dem Kondensator 14 die Leckageluft 44 abgesaugt.

Änderungen im erfindungsgemäßen Sinn gegenüber der dargestellten Verfahrensvariante sind beispielsweise der Verzicht auf die 3. Eindampfstufe (Verdampfer 7, Pumpe 8, Wärmeaustauscher 9) oder die getrennte Kondensation der Brüden aus Verdampfer 4 und Verdampfer 7 mit der dann gegebenen Möglichkeit, diese Verdampfer bei verschiedenem Druck betreiben zu können.

Die Vorteile des erfindungsgemäßen Verfahrens sollen anhand der Beispiele verdeutlicht werden, ohne daß darin eine Einschränkung zu sehen ist.

### Vergleichsbeispiel

In einen dreistufigen Vakuumzwangsumlaufverdampfer wurden 32 t/h Dünnsäure 17 (entsprechend der Fig.) mit 24,6 Gew.-% H₂SO₄ und 12,8 Gew.-% MeSO₄ eingespeist. In der ersten Verdampferstufe, die mit 5 bar-Dampf 20 beheizt wurde, wurden bei 120°C und 0,9 bar (abs.) 7,65 t/h Wasser verdampft. Aus dem ersten Verdampfer 1 flossen 24,35 t/h Säure 22 mit 32,3 Gew.-% H₂SO₄ und 16,8 Gew.-% MeSO₄ in den zweiten Verdampfer 4. Die zweite Verdampferstufe wurde mit den Brüden 25 aus der ersten Verdampferstufe beheizt. Im Verdampfer 4 wurden bei 85°C und 50 mbar 8,1 t/h Wasser verdampft.

Aus dem Verdampfer 4 flossen 16,6 t/h einer Suspension 27, die 47,0 Gew.-% H₂SO₄ und 24,6 Gew.-% MeSO₄, überwiegend in fester Form, enthielt, in die dritte Verdampferstufe. Diese wurde ebenfalls mit 5 bar-Dampf 30 beheizt. Hier wurden bei 88°C und 50 mbar 0,8 t/h Wasser verdampft. Aus dem Verdampfer 7 wurden 15,3 t/h einer Suspension 32 mit 51,0 Gew.-% H₂SO₄ und 26,6 Gew.-% MeSO₄ ausgespeist. Nach dem Abkühlen der Suspension 32 wurde 67,8 %ige Schwefelsäure als Filtrat von den Metallsulfaten abgetrennt.

Die Brüden (34 und 35) aus dem zweiten und dritten Verdampfer 4 und 7 wurden gemeinsam in einem Einspritzkondensator kondensiert, in den Kühlwasser eingespeist wurde. Die stündlich angefallenen 8,95 t Brüdenkondensat enthielten 72 kg H₂SO₄ und 22 kg MeSO₄. Die Brüden 25 aus dem Verdampfer 1, die im Wärmeaustauscher 6 der zweiten Verdampferstufe kondensiert worden waren, enthielten in 7,65 t Kondensat 10,2 kg H₂SO₄ und 5,3 kg MeSO₄.

Insgesamt gelangten 1,05 % der eingespeisten Schwefelsäure und 0,67 % der eingespeisten Metallsulfate in das Brüdenkondensat.

### Beispiel

Die Vakuumeindampfung wurde analog dem Vergleichsbeispiel mit folgenden erfindungsgemäßen Änderungen durchgeführt:
a) Der eingespeisten Dünnsäure wurden stündlich 400 kg Kühlmedium (entsprechend Stoffstrom 39 der Fig.) mit 18 Gew.-% H₂SO₄ und 5,5 Gew.-% MeSO₄ zugefügt, die 50 g einer sulfonierten Fettsäure (Monopolöl®, Handelsprodukt der Fa. Stockhausen, Krefeld) als Entschäumer enthielten.
   Dadurch erhöhte sich der Dampfverbrauch 20 in der ersten Verdampferstufe um ca. 1,5 %.
   Das aus dem Wärmeaustauscher 6 abfließende Brüdenkondensat 26 enthielt nur 1,2 kg H₂SO₄ und 0,6 kg MeSO₄ und konnte direkt als Abwasser abgeleitet werden.
b) Die Brüden 34 und 35 aus dem zweiten und dritten Verdampfer 4 und 7 wurden in den Kondensator 10 eingeleitet, wo sie im direkten Kontakt mit 800 m³/h 18 %iger, metallsulfathaltiger Schwefelsäure 37 kondensiert wurden, die eine Temperatur von 32°C hatte. Aus dem Kondensator 10 flossen 809 m³/h Schwefelsäure 36 mit einer Temperatur von 37°C ab. Diese wurde mit 0,8 m³/h Wasser 38 versetzt (dem außerdem 50 g/h Monopolöl® als Entschäumer zugegeben wurden) und mittels Kreislaufpumpe 11 in den Flash-Verdampfer 12 eingespeist. In diesem wurden bei einem Druck von 40 mbar 9,55 t/h Wasser verdampft, wobei sich die Kreislaufsäure wieder auf 32°C abkühlte. Von dieser abgekühlten 18 %igen Säure wurden, wie unter a) ausgeführt, 400 kg/h als Stoffstrom 39 ausgespeist und in die erste Verdampferstufe zurückgeführt.

Mittels Vakuumpumpe 13 wurde der Unterdruck in den Verdampfern 4 und 7 sowie im Kondensator 10 auf 50 mbar gehalten.

Die im Flash-Verdampfer 12 anfallenden Brüden 41 wurden durch einen Wire-mesh-Tropfenabscheider 40 in den Kondensator 14 geleitet. In den Kondensator 14 wurden 340 m³/h Kühlwasser 42 mit einer Temperatur von 13°C eingeleitet. Das abfließende Kühlwasser und Brüdenkondensat 43 hatte eine Temperatur von 28°C und einen pH-Wert von 6,8. Es war keine merkliche Kontamination durch Metallsulate feststellbar, so daß die direkte Ableitung als Abwasser möglich war. Mittels Vakuumpumpe 16 wurde im Kondensator 14 ein Druck von 38 mbar aufrechterhalten.

Die Schwefelsäure- und Metallsulfatverluste durch mit den Brüden ausgetragene Tropfen verminderten sich durch die Anwendung des erfindungsgemäßen Verfahrens von 1,05 % der eingespeisten Schwefelsäure auf unter 0,05 % und von 0,67 % der eingespeisten Metallsulfate auf unter 0,03 %.

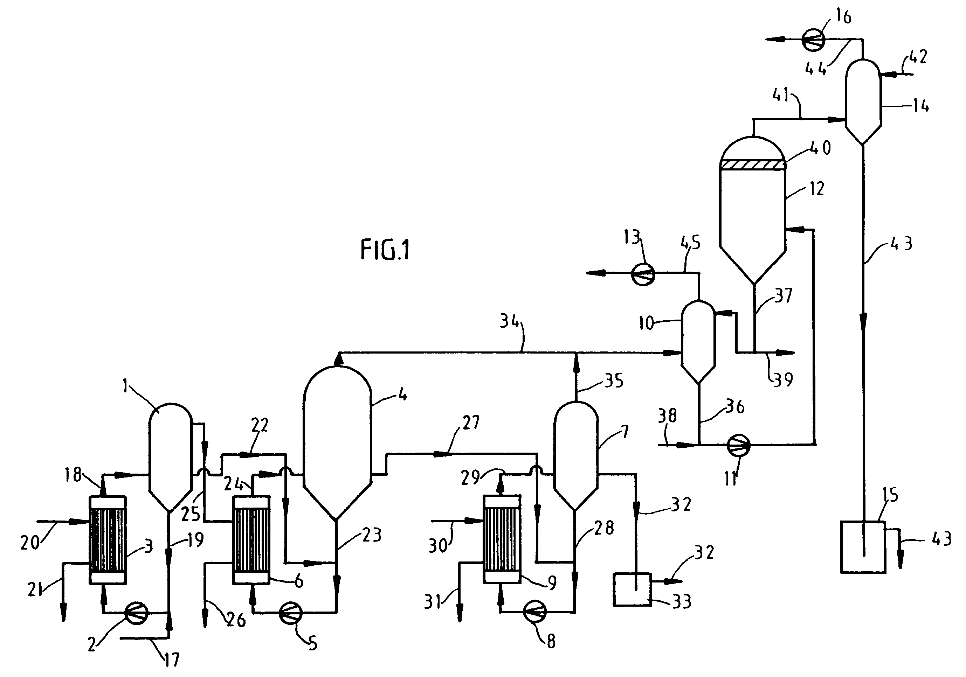

## Patentansprüche

1. Verfahren zur Rückgewinnung von Schwefelsäure aus metallsulfathaltigen Dünnsäuren durch Eindampfen in Umlaufverdampfern und Abtrennen der Metallsulfate aus der beim Eindampfen erhaltenen Suspension, dadurch gekennzeichnet, daß die aus den Verdampfern austretenden metallsulfathaltige Schwefelsäure und feste Metallsulfate enthaltenden Brüden durch direkten Kontakt mit Schwefelsäure und gelöste Metallsulfate enthaltendem gekühltem Brüdenkondensat kondensiert werden und daß die Kühlung dieses als Kühlmedium im Kreislauf geführten Brüdenkondensats durch Wasserverdampfung in einem Flash-Verdampfer unter gleichzeitiger Konzentrierung der Schwefelsäure und Metallsulfate erfolgt.

2. Verfahren gemäß Anspruch 1, dadurch gekennzeichnet, daß das als Kühlmedium im Kreislauf geführte eingedampfte Brüdenkondensat eine Schwefelsäurekonzentration von 1 bis 30, vorzugsweise 5 bis 30 Gew.-% aufweist.

3. Verfahren gemäß einem der Ansprüche 1 oder 2, dadurch gekennzeichnet, daß mit den Brüden aus den Umlaufverdampfern ausgetragene Metallsulfate und Schwefelsäure als 1 bis 30 %ige, vorzugsweise 5 bis 30 %ige, metallsulfathaltige Schwefelsäure aus dem Kühlkreislauf abgeleitet und in die Umlaufverdampfer zurückgeführt werden.

4. Verfahren gemäß Anspruch 1 bis 3, dadurch gekennzeichnet, daß dem Kühlkreislauf Entschäumer zugesetzt wird.

5. Verfahren gemäß einem oder mehreren der Ansprüche 1 bis 3, dadurch gekennzeichnet, daß die bei der Kühlung des schwefelsäure- und metallsufathaltigen Kühlmediums in Flash-Verdampfer anfallenden Brüden durch einen oder mehrere Tropfenabscheider zu einem mit Kühlmittel beaufschlagten Kondensator geleitet werden.

## Claims

1. A process for recovering sulfuric acid from thin acids containing metal sulfates by boiling down in forced-circulation reboilers and removal of the metal sulfates from the suspension obtained by boiling down, characterized in that the sulfuric acid containing metal sulfates and vapours containing solid metal sulfates issuing from the reboilers are condensed by direct contact with cooled vapour condensate containing sulfuric acid and dissolved metal sulfates and in that the vapour condensate circulated as cooling medium is cooled by evaporation of water in a flash evaporator with simultaneous concentration of the sulfuric acid and metal sulfates.

2. A process as claimed in claim 1, characterized in that the concentrated vapour condensate circulated as cooling medium has a sulfuric acid concentration of 1 to 30% by weight and preferably 5 to 30% by weight.

3. A process as claimed in claim 1 or 2, characterized in that metal sulfates and sulfuric acid discharged with the vapours from the forced circulation reboilers are removed from the cooling circuit as 1 to 30% and preferably 5 to 30% sulfuric acid containing metal sulfates and returned to the forced-circulation reboilers.

4. A process as claimed in any of claims 1 to 3, characterized in that defoaming agents are added to the cooling circuit.

5. A process as claimed in one or more of claims 1 to 3, characterized in that the vapours formed during cooling of the cooling medium containing sulfuric acid and metal sulfates in the flash evaporator are passed through one or more drop separators to a condenser fed with coolant.

## Revendications

1. Procédé de récupération d'acide sulfurique à partir d'acides dilués contenant des sulfates métalliques par évaporation dans des évaporateurs à circulation et séparation des sulfates métalliques de la suspension obtenue lors de l'évaporation, caractérisé en ce que l'acide sulfurique contenant des sulfates métalliques et les vapeurs contenant des sulfates métalliques solides issus des évaporateurs sont condensés par contact direct avec du condensat de vapeurs refroidi contenant de l'acide sulfurique et des sulfates métalliques dissous et en ce que le refroidissement de ce condensat de vapeurs recyclé en tant qu'agent réfrigérant se fait par évaporation d'eau dans un appareil de distillation éclair avec concentration simultanée de l'acide sulfurique et des sulfates métalliques.

2. Procédé selon la revendication 1, caractérisé en ce que le condensat de vapeurs évaporé recyclé comme agent réfrigérant présente une concentration d'acide sulfurique de 1 à 30, de préférence de 5 à 30 % en poids.

3. Procédé selon l'une des revendications 1 ou 2, caractérisé en ce qu'on fait sortir du circuit de refroidissement de l'acide sulfurique et des sulfates métalliques, évacués avec les vapeurs des évaporateurs à circulation, sous forme d'acide sulfurique à une concentration de 1 à 30 %, de préférence de 5 à 30 %,contenant des sulfates métalliques, et en ce qu'on le renvoie dans les évaporateurs à circulation.

4. Procédé selon les revendications 1 à 3, caractérisé en ce qu'on ajoute des antimousses au circuit de refroidissement.

5. Procédé selon l'une ou plusieurs des revendications 1 à 3, caractérisé en ce qu'on fait passer les vapeurs formées dans l'appareil de distillation éclair lors du refroidissement de l'agent réfrigérant contenant de l'acide sulfurique et des sulfates métalliques à travers un ou plusieurs pare-gouttes dans un condenseur alimenté en agent réfrigérant.
